# EUROPEAN PATENT SPECIFICATION

(11) **EP 3 599 768 B1**
(45) Date of publication and mention of the grant of the patent: **07.07.2021**
(21) Application number: 18185180.9
(22) Date of filing: 24.07.2018
(51) Int. Cl.: H04N 21/422, H04N 21/454

(54) **REMOTE CONTROLLER FOR LOCKING OR UNLOCKING OF TV CHANNELS**
FERNBEDIENUNG ZUR SPERRUNG ODER ENTSPERRUNG VON TV-KANÄLEN
CONTRÔLEUR À DISTANCE POUR VERROUILLAGE OU DÉVERROUILLAGE DE CANAUX DE TÉLÉVISION

(43) Date of publication of application: 29.01.2020
(73) Proprietor: Vestel Elektronik Sanayi ve Ticaret A.S., 45030 Manisa (TR)
(72) Inventor: ÖZBAY, Mustafa Caner, 45030 Manisa (TR)
(74) Representative: Kehl, Ascherl, Liebhoff & Ettmayr Patentanwälte Partnerschaft mbB

(56) References cited:
- US-A- 5 883 680
- US-A1- 2011 090 407
- US-B1- 6 407 779

## Description

### TECHNICAL FIELD

The present invention refers according to claim 1 to a system comprising a TV and according to claim 8 to a method for operating said remote controller.

### BACKGROUND

Document CN1359234A discloses a remote controller which has a button on it. This button can lock or unlock a channel. The user can switch between locked channels by using the button. Even there is a button on RC for lock operation, channel locking is a feature of TV not the RC.

Document US5,883,680 discloses a remote control device having, in one embodiment, a keypad including a time-lock key and another key; means for locking the other key for a time period specified by a user in response to a depression of the time-lock key; and a transmitter for transmitting a channel select signal in response to a depression of the other key when the other key is not locked. In a further embodiment the remote control device has a keypad including a key; a processor for generating electrical signals in response to a depression of the key; a transmitter for transmitting a transmit signal in response to the electrical signals; a low frequency detector for detecting low frequency soundwaves; and an audio signal generator for emitting an audio signal in response to the low frequency soundwaves.

Document US6,407,779B1 discloses a universal remote control system. Specifically, the remote control system provides the following features: bidirectional communications between the remote control and at least one of the audio/video devices; dual communication mode; automatic communication mode selection; loading and processing electronic program guide in the remote control; soft graphical user interface in the remote control; expanding the television set functions by the remote control; calibration handshake between the remote control and the audio/video device; updating the remote control; lost beacon signal in the remote control; handwriting recognition mechanism, and voice recognition mechanism in the remote control.

US2011/090407A1 discloses a method and system for operating a remote-controlled device using a gesture-enabled remote control (RC), wherein the method or system includes activating a communication link between the RC and the remote-controlled device. The remote-controlled device may implement a remote control context accommodating gesture commands generated by the RC. The RC may enable a user to generate gesture commands by performing gesture motions with the RC. Command data corresponding to gesture commands, along with selection commands from selection control inputs on the RC, may be sent to the remote-controlled device.

### OBJECT OF THE INVENTION

Thus, it is an object of the present invention to allow locking and unlocking of channels even in case the television appliance does not provide a software-based locking or unlocking feature.

### SUMMARY OF THE INVENTION

The invention is defined by the appended independent claims and will be more readily understood after reading the following detailed description taken in conjunction with the accompanying drawings.

The before mentioned object is solved by a system according to claim 1. Said system comprises a television appliance, in particular TV or set-top box, and a remote controller. The remote controller or remote control comprises a communication means, in particular an IR transmitter, for transferring operation commands, in particularly channel switching commands, to the television appliance. The television appliance preferably comprises a receiver for receiving the operation commands and preferably a sender for sending responses to the receiver for receiving the operation commands and preferably a sender for sending responses to the remote controller in dependency of the received operation commands. The remote controller further comprises a feedback receiver for receiving the responses send by sender. The feedback receiver can be part of the communication means, in particular another or the same IR-unit. The remote controller comprises a microcontroller for tracking the outputted operation commands in dependency of the received responses. The communication unit alternatively might be a Bluetooth or WIFI unit.

This solution is beneficial since channel locking or channel unlocking takes place by means of the remote controller. Thus, the television appliance does not necessarily need to be equipped with a channel locking or unlocking feature since the remote controller provides said feature. Therefore, the remote controller can be used to upgrade existing television appliances.

According to the preferred embodiment of the present invention the remote controller comprises an input means for inputting channel lock commands, wherein the remote controller comprises a memory for storing data, wherein the microcontroller stores channel data identifying the locked channel in that memory, wherein the microcontroller determines if an operation command causes tuning to a locked channel, wherein the microcontroller compares the operation command and channel data stored in memory, wherein the microcontroller blocks or restricts outputting of channel tuning commands for channel tuning to a locked channel or wherein the microcontroller causes outputting of channel tuning commands for channel tuning to a not restricted channel. It is possible that the memory belongs to the microcontroller or that the memory is a separate memory within the remote controller. The memory and the microcontroller are preferably linked or coupled via wires or part of a printed circuit board or attached to a printed circuit board. The same preferably applies to a battery.

This embodiment is beneficial since channel restriction is carried out by the microprocessor of the remote controller and not by a microcontroller of the television appliance. The term "television appliance" describes in the context of the present invention each device that provides the ability to tune between multiple TV channels. The term "television appliance" does not comprise remote controllers. Thus, a television appliance can be e.g. a TV or a set-top box or a beamer. A none-restricted channel hereby preferably describes a channel which is not locked respectively which is not stored as locked channel in the memory of the remote controller. Contrary to that a restricted channel hereby preferably describes a channel which is locked respectively which is stored as locked channel in the memory of the remote controller.

A channel search command and/or a channel list reconfiguration command can be triggered according to the preferred embodiment of the present invention by the input means, wherein the microcontroller of the remote controller blocks or restricts the channel search command and/or the channel list reconfiguration command in case at least one channel is locked. This embodiment is beneficial since the channel listing cannot be affected as long as at least one channel is locked. Thus, accessing a locked channel by relisting the list of channels is prevented.

The sender of the television appliance sends according to the preferred embodiment of the present invention a response to the feedback receiver of the remote controller, wherein the response corresponds to the transferred operation command that caused the sender to send the response. This embodiment is beneficial since the remote controller receives an information about the actual channel switching event. Thus, the remote controller always has sufficient information about the currently tuned channel.

The input means comprises according to a further preferred embodiment of the present invention a microphone for detecting speech, wherein the microcontroller locks or unlocks one or more channels in dependency of commands inputted via the microphone. This embodiment is beneficial since the user can easily lock or unlock one or multiple channels. Furthermore, the total amount of keys on the remote controller can be reduced. It is also possible that channel tuning commands are inputted via the microphone.

The remote controller comprises according to a further preferred embodiment of the present invention a housing, wherein the housing comprises at least keys and/or a touch field for haptic input and preferably a hole, wherein the microphone is arranged behind said hole. This embodiment is beneficial since an alternative or additional option for channel tuning and/or unlocking/locking of channels is present.

Channel tuning commands are according to a further preferred embodiment of the present invention inputted with the keys and/or touch field. A further key or a key actuation sequence or a predefined touch field interaction preferably causes locking or unlocking of the tuned channel, wherein channel data linked to the locked channel is stored in the memory of the remote controller. An unlocking or accessing criteria, in particular a code, can be inputted with the keys and/or touch field, wherein the unlocking or accessing criteria is linked or added to the respective channel data. This embodiment is beneficial since a locked channel can be unlocked even if the microphone cannot be used, e.g. in case it is too noisy.

The remote controller comprises according to a further preferred embodiment of the present invention a signal or display means, in particular LEDs, for indicating if locking out of a specific channel takes place by means of a microphone or by means of keys and/or a touch field. A touch field can be e.g. a capacitive unit, like e.g. a capacitive screen. This embodiment is beneficial since the user easily recognized the selected option.

The remote controller comprises according to a further preferred embodiment of the present invention a battery, wherein the remote controller transfers an initial command, in particularly a tuning command, in particularly for tuning to a specific channel, to the receiver of the television appliance after the battery was replaced or charged or after the remote controller was switched on or after the remote controller was switched from a stand-by mode in an operation mode. In case the television appliance is switched off or cut off the remote controller preferably stores the last channel data until the television appliance is switched on again or replaces the last channel data with default channel data. This embodiment is beneficial since the remote controller has sufficient channel information respectively channel data to correctly lock or unlock pre-set respectively prior set channel/s.

The television appliance comprises according to a further preferred embodiment of the present invention a touch field or keys for inserting channel tuning commands, wherein access to said touch field or keys of the television appliance is restricted by a mechanical locking member. The television appliance is preferably arranged behind a window, in particularly inside a piece of furniture. Thus, a television appliance e.g. arranged in a hotel or behind a shop window or inside a vitrine can be viewed by audience but not touched. The remote controller according to the present invention helps to restrict channel tuning to a defined number of channels or a defined sequence of channels, wherein the defined number of channels or the defined sequence comprises less than 10 channels or less than 5 channels or less than 3 channels, in particularly 1 or up to 2 or exactly 2 channels. Thus, it is possible to restrict the functions of the remote controller to volume changes and/or switching on and off only.

The television appliance does not comprise according to a further preferred embodiment of the present invention a software-based channel locking function. This embodiment is beneficial since the remote controller can be used for upgrading television appliances.

The above-mentioned object is also solved by a remote controller respectively remote control (RC) for controlling a multimedia device, in particularly a television appliance, in particularly a TV or set-top box.

The remote controller preferably comprises at least a communication means, in particular an IR transmitter, for transferring operation commands, in particularly channel switching commands, to the multimedia device, a feedback receiver for receiving data and/or signals from the multimedia device in response to the transferred operation commands, and a microcontroller for tracking the outputted operation commands in dependency of the received responses. The remote controller preferably further comprises an input means for inputting channel lock commands, a memory for storing data, wherein the microcontroller stores channel data identifying the locked channel in that memory, wherein the microcontroller determines if an operation command causes tuning to a locked channel, wherein the microcontroller compares the operation command and channel data stored in memory, wherein the microcontroller blocks or restricts outputting of channel tuning commands for channel tuning to a locked channel or wherein the microcontroller causes outputting of channel tuning commands for channel tuning to a not restricted channel. A not restricted channel hereby preferably describes a channel which is not locked respectively which is not stored as locked channel in the memory. Thus, the present invention discloses a remote controller (RC) which preferably has a microcontroller, an IR transmitter and an IR receiver, a microphone and a special button to enable the mic. This invention works if TV doesn't have any lock function or have a weak password algorithm. Because all lock operations will be controlled by RC, not by TV. RC hereby preferably keeps the selected channel memory. With the first power on for TV, channel number will be the first channel (1). Then every pressed numbers or Program +/- buttons will change channel number. The microcontroller can follow the pressed buttons and decide the current channel number which desired to display on screen. When user pressed any button, IR signal will be forwarded to TV and TV will send preferably the same command back to be sure of IR signal changed the channel on TV. So, it is prevented from being deceived. Since the current channel number is known by the RC, the user can perform any operation such as channel parental lock for that specific channel.

The above-mentioned object is also solved by a method for locking a channel according to claim 8.

The method preferably comprises at least the steps: Providing a remote controller according to the invention. Transferring operation commands to the multimedia device by means of the communication means. Receiving data and/or signals from the multimedia device in response to the transferred operation commands by means of the feedback receiver and tracking the outputted operation commands in dependency of the received responses by means of the microcontroller.

Further benefits, goals and features of the present invention will be described by the following specification of the attached figures, in which exemplarily components of the invention are illustrated. Components of the devices, units and methods according to the invention, which match at least essentially with respect to their function can be marked with the same reference sign, wherein such components do not have to be marked or described multiple times with respect to said figures. In the following the invention is just exemplarily described with respect to the attached figures.

### BRIEF DESCRIPTION OF THE DRAWINGS

For a more complete understanding of the present invention and advantages thereof, reference is now made to the following description taken in conjunction with the accompanying drawings. The invention is explained in more detail below using an exemplary embodiment which is specified in the schematic figures of the drawings, in which:

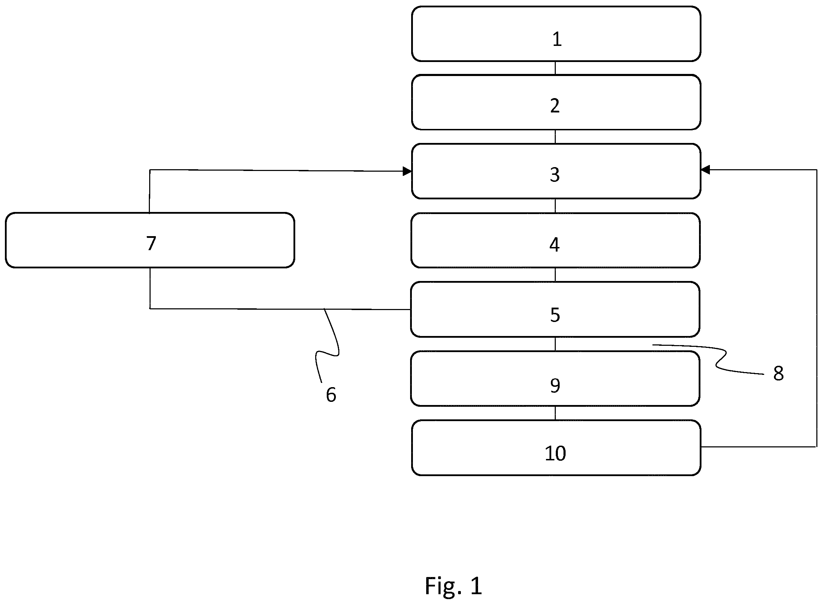

- Fig. 1: shows exemplarily a flow chart about a preferred sequence according to the present invention and
- Fig. 2: a preferred system according to the present invention.

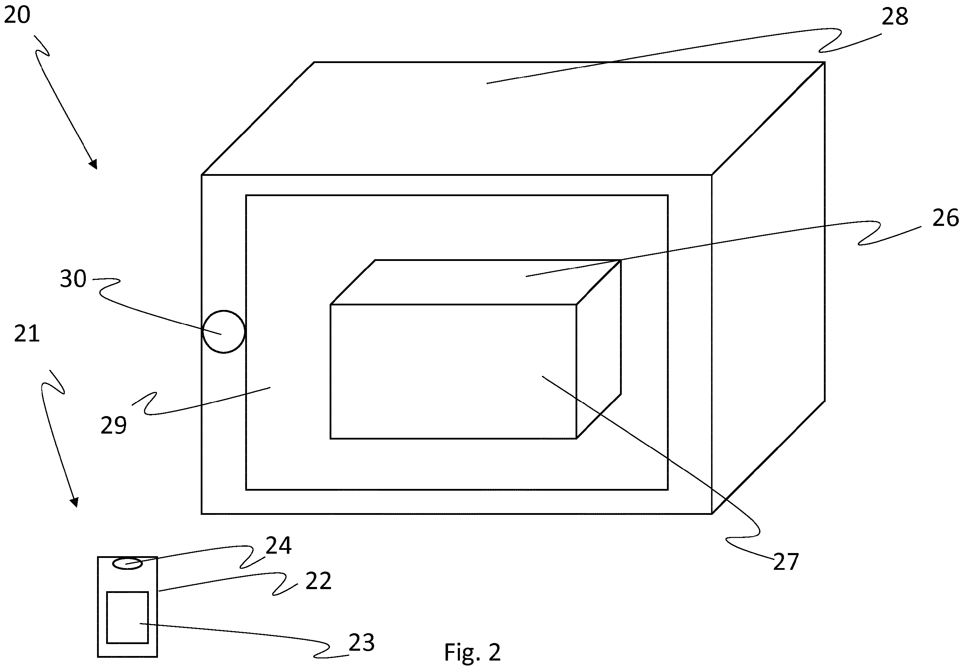

Reference number 1 indicates the step "waiting for power on button on RC". According to step 2 a current channel number is checked. The current channel number after switching on a television appliance is the first channel, in particularly in a channel list, or the last channel the television appliance 26 (cf. fig. 2) was tuned to before stand by or switching off or a default channel.

According to reference number 3 any button of remote controller 21 (cf. fig. 2) is pressed.

According to reference number 4 it is checked if a channel changing respectively a tuning event was triggered by pressing a button according to reference number 3. Before tuning to a selected channel, it is checked if said channel is locked (reference number 5). Reference number 6 indicates a path which is selected in case the desired channel is locked. According to reference number 7 the remote controller 21 will not emit signals or data for causing tuning to said locked channel or remote controller 21 will tune to another channel, in particularly a default channel or the previous channel or the channel (in the channel list) directly above or below the locked channel.

Reference number 8 indicates that the desired channel is not locked. Thus, the remote controller 21 transmits the respective tuning commands to the television appliance 26. It is checked according to reference number 9 if the commands are received by TV, in particularly if the infrared signals emitted by remote controller 21 are received. It is therefore checked if the remote controller 21 received signals and/or data in response to the channel tuning commands, wherein such signals and/or data is emitted by the television appliance. In case signals and/or data representing the new channel number or validating the channel change event are received a modification or changing of the data representing the current channel is updated in RC memory.

There can be a few ways to apply parental lock. One of them can be performed by pressing the special button to enable mic, then user can start to talk. A keyword like "lock channel number 47" or "unlock channel number 47" will be used to lock or unlock a channel. This lock operation will be voice based. Microcontroller has a voice recognition feature, so voice can be judged if the speaker is authorized or not. If it is not authorized, no action will be taken.

Other possible action to lock or unlock a channel can be entering a pin code after pressing a special button. Once users reached the channel which should be locked for them, they will press a button and RC is going to wait the pin code. There can be an LED indicator on RC to show the stage to user for every different method described above.

Other key points are e.g.: if there is any locked channel, there will be preferably no new channel search or channel list will be fixed. So number of the locked channel can't be changed and/or if battery of RC is over or is removed, once RC is repowered, it will preferably send a command for zapping to channel 1 or a default channel, so it can start to count channel number again and/or if TV power is cut off, RC will keep the previous channel number or first channel according to the setting of television.

Fig. 2 shows an example of a schematic illustration of the inventive system 20. According to this situation a TV 26 is arranged inside a furniture 28. The furniture 28 comprises a window 29 which enables viewing of the screen 27 of TV 26 even in case window 29 is closed. Window 29 can be preferably locked by means of lock 30.

Reference number 21 indicates a remote controller. The remote controller 21 comprises a housing 22, keys and/or a touch field 23 and a communication means 24, in particularly a IR means.

Thus, the present invention refers to a system comprising a television appliance 26, in particular TV or set-top box, and a remote controller 21. The remote controller 21 preferably comprises a communication means 24, in particular an IR transmitter, for transferring operation commands, in particularly channel switching commands, to the television appliance 26. The television appliance 26 comprises a receiver for receiving the operation commands and a sender for sending responses to the remote controller 21 in dependency of the received operation commands, wherein the remote controller 21 comprises a feedback receiver for receiving the responses send by sender and wherein the remote controller 21 comprises a microcontroller for tracking the outputted operation commands in dependency of the received responses.

## Claims

1. System comprising a television appliance (26), wherein the television appliance is a TV
and a remote controller (21),
wherein the remote controller (21) comprises a communication means (24), wherein the communication means (24) is an IR transmitter for transferring operation commands, wherein the operation commands are channel switching commands to the television appliance (26),
the television appliance (26) comprises a receiver for receiving the operation commands and a sender for sending responses to the remote controller (21) in dependency of the received operation commands,
wherein the remote controller (21) comprises a feedback receiver for receiving the responses send by sender,
wherein the remote controller (21) comprises a memory for storing data, and
wherein the remote controller (21) comprises a microcontroller for tracking the outputted operation commands in dependency of the received responses,
**characterized in that**
the remote controller (21) comprises an input means for inputting channel lock commands,
wherein the microcontroller stores channel data identifying the locked channel **in that** memory, wherein the microcontroller determines if an operation command causes tuning to a locked channel,
wherein the microcontroller compares the operation command and channel data stored in memory,
wherein the microcontroller blocks or restricts outputting of channel tuning commands for channel tuning to a locked channel or wherein the microcontroller causes outputting of channel tuning commands for channel tuning to a not restricted channel, wherein a channel search command and/or a channel list reconfiguration command can be triggered by the input means, wherein the microcontroller of the remote controller (21) blocks or restricts the channel search command and/or the channel list reconfiguration command in case at least one channel is locked wherein the IR transmitter forwards an IR signal to TV in case a button is pressed and TV sends the same command back to feedback receiver to be sure that TV changed the channel in dependency of the forwarded IR signal.

2. System according to claim 1,
**characterized in that**
the input means comprises a microphone for detecting speech, wherein the microcontroller locks or unlocks one or more channels in dependency of commands inputted via the microphone.

3. System according to any of the preceding claims,
**characterized in that**
the remote controller (21) comprises a housing (22), wherein the housing comprises at least keys and/or a touch field (23) for haptic input and preferably a hole, wherein the microphone is arranged behind said hole.

4. System according to claim 3,
**characterized in that**
channel tuning commands are inputted with the keys and/or touch field,
a further key or a key actuation sequence or a predefined touch field interaction causes locking or unlocking of the tuned channel, wherein channel data linked to the locked channel is stored in the memory of the remote controller (21),
wherein an unlocking or accessing criteria, in particular a code, can be inputted with the keys and/or touch field, wherein the unlocking or accessing criteria is linked or added to the respective channel data.

5. System according to claims 2 to 4,
**characterized in that**
the remote controller (21) comprises a signal or display means, in particular LEDs, for indicating if locking out of a specific channel takes place by means of a microphone or by means of keys and/or touch field.

6. System according to any of the preceding claims,
**characterized in that**
the television appliance (26) comprises a touch field or keys for inserting channel tuning commands,
wherein access to said touch field or keys of the television appliance (26) is restricted by a mechanical locking member.

7. System according to any of the preceding claims,
**characterized in that**
the television appliance (26) does not comprise a software-based channel locking function.

8. Method for locking a channel,
comprising the steps:
providing a remote controller (21) for controlling a a TV ,
wherein the remote controller (21) comprises
a communication means (24), wherein the communication means (24) is an IR transmitter for transferring operation commands, wherein the operation commands are channel switching commands to the TV,
a memory for storing data,
a feedback receiver for receiving data and/or signals from the TV in response to the transferred operation commands,
and
a microcontroller for tracking the outputted operation commands in dependency of the received responses.
**characterized in that**
the remote controller (21) further comprises an input means for inputting channel lock commands,
wherein the microcontroller stores channel data identifying the locked channel **in that** memory,
wherein the microcontroller determines if an operation command causes tuning to a locked channel,
wherein the microcontroller compares the operation command and channel data stored in memory,
wherein the microcontroller blocks or restricts outputting of channel tuning commands for channel tuning to a locked channel or wherein the microcontroller causes outputting of channel tuning commands for channel tuning to a not restricted channel,
transferring operation commands to the TV by means of the communication means (24), wherein the IR transmitter forwards an IR signal to TV in case a button is pressed,
receiving data and/or signals from the TV in response to the transferred operation commands by means of the feedback receiver, wherein TV sends the same command back to feedback receiver to be sure that TV changed the channel in dependency of the forwarded IR signal,
and
tracking the outputted operation commands in dependency of the received responses by means of the microcontroller.

## Patentansprüche

1. System mit einem Fernsehgerät (26), wobei das Fernsehgerät ein TV und eine Fernbedienung (21) umfasst,
wobei die Fernbedienung (21) ein Kommunikationsmittel (24) aufweist, wobei das Kommunikationsmittel (24) ein IR-Sender zum Übertragen von Bedienbefehlen ist, wobei die Bedienbefehle Kanalumschaltbefehle an das Fernsehgerät (26) sind,
das Fernsehgerät (26) einen Empfänger zum Empfangen der Bedienbefehle und einen Sender zum Senden von Antworten an die Fernbedienung (21) in Abhängigkeit von den empfangenen Bedienbefehlen aufweist,
wobei die Fernsteuerung (21) einen Rückmeldeempfänger zum Empfangen der vom Sender gesendeten Antworten aufweist, wobei die Fernsteuerung (21) einen Speicher zum Speichern von Daten aufweist, und
wobei die Fernsteuerung (21) einen Mikrocontroller zum Verfolgen der ausgegebenen Bedienbefehle in Abhängigkeit von den empfangenen Antworten aufweist,
**dadurch gekennzeichnet, dass**
die Fernsteuerung (21) ein Eingabemittel zur Eingabe von Kanalsperrbefehlen umfasst, wobei der Mikrocontroller Kanaldaten, die den gesperrten Kanal identifizieren, in dem Speicher speichert,
wobei der Mikrocontroller feststellt, ob ein Betriebsbefehl eine Abstimmung auf einen gesperrten Kanal bewirkt,
wobei der Mikrocontroller den Betriebsbefehl und die im Speicher gespeicherten Kanaldaten vergleicht,
wobei der Mikrocontroller die Ausgabe von Kanalabstimmungsbefehlen für die Kanalabstimmung auf einen gesperrten Kanal blockiert oder einschränkt oder wobei der Mikrocontroller die Ausgabe von Kanalabstimmungsbefehlen für die Kanalabstimmung auf einen nicht eingeschränkten Kanal veranlasst, wobei durch die Eingabeeinrichtung ein Kanalsuchbefehl und/oder ein Befehl zur Rekonfiguration der Kanalliste ausgelöst werden kann,
wobei der Mikrocontroller der Fernbedienung (21) den Kanalsuchbefehl und/oder den Kanallistenumkonfigurationsbefehl blockiert oder einschränkt, falls mindestens ein Kanal gesperrt ist, wobei der IR-Sender ein IR-Signal an das TV-Gerät weiterleitet, falls eine Taste gedrückt wird, und das TV-Gerät denselben Befehl an den Rückmeldeempfänger zurücksendet, um sicher zu sein, dass das TV-Gerät den Kanal in Abhängigkeit von dem weitergeleiteten IR-Signal geändert hat.

2. System nach Anspruch 1,
**dadurch gekennzeichnet, dass**
die Eingabeeinrichtung ein Mikrofon zur Spracherkennung umfasst, wobei der Mikrocontroller einen oder mehrere Kanäle in Abhängigkeit von über das Mikrofon eingegebenen Befehlen sperrt oder freigibt.

3. System nach einem der vorhergehenden Ansprüche,
**dadurch gekennzeichnet, dass**
die Fernbedienung (21) ein Gehäuse (22) aufweist, wobei das Gehäuse zumindest Tasten und/oder ein Touchfeld (23) zur haptischen Eingabe und vorzugsweise ein Loch aufweist, wobei das Mikrofon hinter dem Loch angeordnet ist.

4. System nach Anspruch 3,
**dadurch gekennzeichnet, dass**
Kanalabstimmungsbefehle mit den Tasten und/oder dem Touchfeld eingegeben werden, eine weitere Taste oder eine Tastenbetätigungssequenz oder eine vordefinierte Touchfeld-Interaktion eine Sperrung oder Entsperrung des abgestimmten Kanals bewirkt, wobei mit dem gesperrten Kanal verknüpfte Kanaldaten im Speicher der Fernbedienung (21) abgelegt sind
wobei mit den Tasten und/oder dem Touchfeld ein Entsperr- oder Zugriffskriterium, insbesondere ein Code, eingegeben werden kann, wobei das Entsperr- oder Zugriffskriterium mit den jeweiligen Kanaldaten verknüpft oder hinzugefügt wird.

5. System nach einem der Ansprüche 2 bis 4,
**dadurch gekennzeichnet, dass**
die Fernbedienung (21) eine Signal- oder Anzeigeeinrichtung, insbesondere LEDs, zur Anzeige, ob eine Entsperrung eines bestimmten Kanals mittels Mikrofon oder mittels Tasten und/oder Touchfeld erfolgt, aufweist.

6. System nach einem der vorhergehenden Ansprüche,
**dadurch gekennzeichnet, dass**
das Fernsehgerät (26) ein Berührungsfeld oder Tasten zum Eingeben von Kanalabstimmbefehlen aufweist,
wobei der Zugriff auf das Berührungsfeld oder die Tasten des Fernsehgerätes (26) durch ein mechanisches Sperrelement eingeschränkt ist.

7. System nach einem der vorhergehenden Ansprüche,
**dadurch gekennzeichnet, dass**
das Fernsehgerät (26) keine softwarebasierte Kanalsperrfunktion aufweist.

8. Verfahren zum Sperren eines Kanals,
umfassend die Schritte:
Bereitstellen einer Fernbedienung (21) zur Steuerung eines Fernsehgerätes ,
wobei die Fernsteuerung (21) umfasst
ein Kommunikationsmittel (24), wobei das Kommunikationsmittel (24) ein IR-Sender zum Übertragen von Betriebsbefehlen ist, wobei die Betriebsbefehle Kanalumschaltbefehle an das Fernsehgerät sind, einen Speicher zum Speichern von Daten,
einen Rückmeldeempfänger zum Empfangen von Daten und/oder Signalen vom TV-Gerät in Reaktion auf die übertragenen Betriebsbefehle
und
einen Mikrocontroller zum Verfolgen der ausgegebenen Betriebsbefehle in Abhängigkeit von den empfangenen Antworten, **dadurch gekennzeichnet, dass** die Fernsteuerung (21) ferner umfasst
ein Eingabemittel zum Eingeben von Kanalsperrbefehlen,
wobei der Mikrocontroller Kanaldaten speichert, die den gesperrten Kanal in dem Speicher identifizieren,
wobei der Mikrocontroller feststellt, ob ein Betriebsbefehl eine Abstimmung auf einen gesperrten Kanal bewirkt,
wobei der Mikrocontroller den Betriebsbefehl und die im Speicher gespeicherten Kanaldaten vergleicht,
wobei der Mikrocontroller die Ausgabe von Kanalabstimmungsbefehlen zur Kanalabstimmung auf einen gesperrten Kanal blockiert oder einschränkt oder wobei der Mikrocontroller die Ausgabe von Kanalabstimmungsbefehlen zur Kanalabstimmung auf einen nicht eingeschränkten Kanal veranlasst,
Übertragen von Betriebsbefehlen an das TV-Gerät mittels des Kommunikationsmittels (24), wobei der IR-Sender ein IR-Signal an das TV-Gerät weiterleitet, wenn eine Taste gedrückt wird,
Empfangen von Daten und/oder Signalen von dem TV-Gerät als Reaktion auf die übertragenen Betriebsbefehle mittels des Rückmeldeempfängers, wobei das TV-Gerät denselben Befehl an den Rückmeldeempfänger zurücksendet, um sicher zu sein, dass das TV-Gerät den Kanal in Abhängigkeit von dem weitergeleiteten IR-Signal geändert hat,
und
Verfolgen der ausgegebenen Betriebsbefehle in Abhängigkeit von den empfangenen Antworten mittels des Mikrocontrollers.

## Revendications

1. Système comprenant un appareil de télévision (26), dans lequel l'appareil de télévision est un téléviseur et une télécommande (21),
dans lequel la télécommande (21) comprend un moyen de communication (24), dans lequel le moyen de communication (24) est un émetteur IR pour transférer des commandes de fonctionnement, dans lequel les commandes de fonctionnement sont des commandes de commutation de canal vers l'appareil de télévision (26),
l'appareil de télévision (26) comprend un récepteur pour recevoir les commandes de fonctionnement et un émetteur pour envoyer des réponses à la télécommande (21) en fonction des commandes de fonctionnement reçues,
dans lequel la télécommande (21) comprend un récepteur de retour pour recevoir les réponses envoyées par l'expéditeur, dans lequel la télécommande (21) comprend une mémoire pour stocker des données, et
dans lequel la télécommande (21) comprend un microcontrôleur pour suivre les commandes d'opération émises en fonction des réponses reçues,
**caractérisé en ce que**
la télécommande (21) comprend un moyen d'entrée pour entrer des commandes de verrouillage de canal,
dans lequel le microcontrôleur stocke des données de canal identifiant le canal verrouillé dans cette mémoire,
dans lequel le microcontrôleur détermine si une commande de fonctionnement provoque un accord sur un canal verrouillé,
dans lequel le microcontrôleur compare la commande d'opération et les données de canal stockées dans la mémoire,
dans lequel le microcontrôleur bloque ou restreint la sortie de commandes d'accord de canal pour l'accord de canal sur un canal verrouillé ou dans lequel le microcontrôleur provoque la sortie de commandes d'accord de canal pour l'accord de canal sur un canal non restreint, dans lequel une commande de recherche de canal et/ou une commande de reconfiguration de liste de canaux peut être déclenchée par le moyen d'entrée,
dans lequel le microcontrôleur de la télécommande (21) bloque ou restreint la commande de recherche de canal et/ou la commande de reconfiguration de liste de canaux dans le cas où au moins un canal est verrouillé, dans lequel l'émetteur IR transmet un signal IR au téléviseur dans le cas où un bouton est pressé et le téléviseur renvoie la même commande au récepteur de retour pour être sûr que le téléviseur a changé de canal en fonction du signal IR transmis.

2. Système selon la revendication 1,
**caractérisé en ce que**
le moyen d'entrée comprend un microphone pour détecter la parole, dans lequel le microcontrôleur verrouille ou déverrouille un ou plusieurs canaux en fonction des commandes entrées via le microphone.

3. Système selon l'une quelconque des revendications précédentes,
**caractérisé en ce que**
la télécommande (21) comprend un boîtier (22), dans lequel le boîtier comprend au moins des touches et/ou un champ tactile (23) pour une entrée haptique et de préférence un trou, dans lequel le microphone est placé derrière ledit trou.

4. Système selon la revendication 3,
**caractérisé en ce que**
les commandes d'accord de canal sont saisies avec les touches et/ou le champ tactile,
une autre touche ou une séquence d'actionnement de touche ou une interaction de champ tactile prédéfinie provoque le verrouillage ou le déverrouillage du canal syntonisé, dans lequel les données de canal liées au canal verrouillé sont stockées dans la mémoire de la télécommande (21),
dans lequel un critère de déverrouillage ou d'accès, en particulier un code, peut être entré avec les touches et/ou le champ tactile, dans lequel le critère de déverrouillage ou d'accès est lié ou ajouté aux données de canal respectives.

5. Système selon les revendications 2 à 4,
**caractérisé en ce que**
la télécommande (21) comprend un moyen de signalisation ou d'affichage, en particulier des LED, pour indiquer si le verrouillage d'un canal spécifique a lieu au moyen d'un microphone ou au moyen de touches et/ou d'un champ tactile.

6. Système selon l'une quelconque des revendications précédentes,
**caractérisé en ce que**
l'appareil de télévision (26) comprend un champ tactile ou des touches pour insérer des commandes d'accord de canal,
dans lequel l'accès à ce champ tactile ou à ces touches de l'appareil de télévision (26) est limité par un élément de verrouillage mécanique.

7. Système selon l'une quelconque des revendications précédentes,
**caractérisé en ce que**
l'appareil de télévision (26) ne comprend pas de fonction de verrouillage des canaux basée sur un logiciel.

8. Méthode de verrouillage d'un canal,
comprenant les étapes suivantes :
fournir une télécommande (21) pour commander un téléviseur,
dans lequel la télécommande (21) comprend
un moyen de communication (24), dans lequel le moyen de communication (24) est un émetteur IR pour transférer des commandes d'opération, dans lequel les commandes d'opération sont des commandes de commutation de canal vers la TV, une mémoire pour stocker des données,
un récepteur de retour pour recevoir des données et/ou des signaux du téléviseur en réponse aux commandes de fonctionnement transférées,
et
un microcontrôleur pour suivre les commandes d'opération sorties en fonction des réponses reçues, **caractérisé en ce que** la télécommande (21) comprend en outre
un moyen d'entrée pour entrer des commandes de verrouillage de canal,
dans lequel le microcontrôleur stocke des données de canal identifiant le canal verrouillé dans cette mémoire,
dans lequel le microcontrôleur détermine si une commande de fonctionnement provoque un accord sur un canal verrouillé,
dans lequel le microcontrôleur compare la commande d'opération et les données de canal stockées dans la mémoire,
dans lequel le microcontrôleur bloque ou restreint la sortie des commandes de syntonisation de canal pour la syntonisation de canal sur un canal verrouillé ou dans lequel le microcontrôleur provoque la sortie des commandes de syntonisation de canal pour la syntonisation de canal sur un canal non restreint,
transférer des commandes de fonctionnement au téléviseur au moyen du moyen de communication (24), dans lequel l'émetteur IR transmet un signal IR au téléviseur dans le cas où un bouton est pressé,
recevoir des données et/ou des signaux du téléviseur en réponse aux commandes de fonctionnement transférées au moyen du récepteur de retour, dans lequel le téléviseur renvoie la même commande au récepteur de retour pour s'assurer que le téléviseur a changé de canal en fonction du signal IR transmis,
et
le suivi des commandes d'opération émises en fonction des réponses reçues au moyen du microcontrôleur.
